# EUROPÄISCHE PATENTSCHRIFT

(11) **EP 2 525 308 B1**
(45) Veröffentlichungstag und Bekanntmachung des Hinweises auf die Patenterteilung: **03.04.2019**
(21) Anmeldenummer: 11166250.8
(22) Anmeldetag: 16.05.2011
(51) Int. Cl.: G06Q 10/00, G06Q 30/00

(54) **System und Verfahren zur Bereitstellung von Konsumgütern, insbesondere von frischen und gefrorenen Lebensmitteln**
System and method for providing consumer goods, in particular fresh and frozen foods
Système et procédé de préparation de biens de consommation, notamment d'aliments frais et congelés

(43) Veröffentlichungstag der Anmeldung: 21.11.2012
(73) Patentinhaber: Game Changer AG, 92660 Neustadt a.d. Waldnaab (DE)
(72) Erfinder: Krachtus, Werner, 92699 Bechtsrieth (DE)
(74) Vertreter: Lermer, Christoph

(56) Entgegenhaltungen:
- EP-A1- 2 246 814
- WO-A1-01/78022
- DE-U1- 20 080 214
- FR-A1- 2 643 479
- US-A1- 2007 150 373
- US-A1- 2008 308 356
- US-B1- 7 054 832

## Beschreibung

### TECHNISCHES GEBIET

Die Anmeldung bezieht sich auf ein System zur Bereitstellung von Konsumgütern, insbesondere von frischen und gefrorenen Lebensmitteln, umfassend eine zentrale Kommissionierstation zur Kommissionierung von Waren; und wenigstens einen Transferbehälter zur Aufnahme der kommissionierten Waren. Außerdem bezieht sich die Anmeldung auf ein Verfahren zur Bereitstellung von Konsumgütern, insbesondere von Lebensmitteln, gemäß Anspruch 6.

### STAND DER TECHNIK

Lebensmittel werden in der Regel über den Einzelhandel an die Endverbraucher abgegeben. Der Einzelhandel bezieht die Waren vom Großhandel. Je nach Nachfrage durch die Endverbraucher werden regelmäßig bestimmte Warenmengen des Sortiments nachbestellt. Im Großhandel werden die Waren kommissioniert, d. h. ein Sortiment von Waren wird aus einem Gesamtangebot von Waren zusammengestellt. Die Zusammenstellung kann händisch oder automatisiert erfolgen. In modernen Großlagern bzw. Logistikstationen wird diese Aufgabe durch komplexe Logistiksysteme übernommen, die die Einlagerung, Lagerhaltung und Kommissionierung von Artikeln bewerkstelligen. Die kommissionierten Warenpakete werden anschließend zu den Verkaufs stätten des Einzelhandels transportiert.

Bei leicht verderblichen Waren ist dabei in jedem Fall darauf zu achten, dass die Kühlkette, beginnend bei der Produktion und Verpackung der Lebensmittel, bis zur Abnahme durch den Endverbraucher, nicht unterbrochen wird. Selbst wenn jedoch die Waren ohne Unterbrechung der Kühlkette in den Einzelhandel gelangt sind, wird die Kühlkette häufig beim Transport der Ware von der Verkaufs stätte an den Wohnort des Endverbrauchers unterbrochen, da die Ware häufig nicht auf dem schnellsten Weg, und außerdem ohne hinreichende Kühlmaßnahmen, zum Wohnort des Endverbrauchers gelangt.

Die Artikel werden im Internet bestellt. Der Betreiber des Online-Verkaufgeschäfts nimmt eine Bestellung entgegen, verpackt die Ware und übersendet diese als Paket an den Kunden. Lebensmittel eignen sich für den Erwerb in Online-Shops nur bedingt, da nicht sicher gestellt werden kann, dass verderbliche Ware ohne Unterbrechung der Kühlkette zum Verbraucher gelangt. So variieren die Transportzeiten erheblich und es ist notwendig, dass der Verbraucher am Abnahmeort anwesend ist.

Außerdem stellt sich die zeitliche Bindung des Verbrauchers an Ladenöffnungszeiten beim Kauf im Einzelhandel bzw. die Notwendigkeit, bestellte verderbliche Ware persönlich annehmen zu müssen, in vielen Fällen als unbequem bzw. nicht realisierbar heraus. Insbesondere ist es dem Verbraucher oft nicht möglich, eine geeignete Kühlung für die verderbliche Ware sicherzustellen.

Die Druckschrift EP 2 246 814 A1 offenbart ein System und ein Verfahren zur Verwaltung von Kaufaufträgen für Verbrauchergüter, wie z. B. Lebensmittel, bei denen die Produkte in einer oder mehreren Verteilungsstrukturen oder Verkaufsstätten verfügbar sind.

### AUFGABE DER ERFINDUNG

Ausgehend davon besteht die Aufgabe der vorliegenden Erfindung darin, ein System und ein Verfahren zur Bereitstellung von Konsumgütern, insbesondere von frischen bzw. gefrorenen Lebensmitteln, vorzuschlagen, die dem Empfänger größere zeitliche Flexibilität bei der Warenannahme bieten, wobei eine Unterbrechung einer für die einzelnen Produkte geeignete Kühlkette ausgeschlossen werden kann.

### TECHNISCHE LÖSUNG

Diese Aufgabe wird gelöst durch ein System und ein Verfahren zur Bereitstellung von Konsumgütern, insbesondere von Lebensmitteln, gemäß dem Anspruch 1 bzw. gemäß dem Anspruch 6. Vorteilhafte Ausführungsformen der Erfindung ergeben sich aus den Merkmalen der abhängigen Ansprüche.

Das System zur Bereitstellung von Konsumgütern, insbesondere von Lebensmitteln, umfasst: eine zentrale Kommissionierstation zur Kommissionierung von Waren; wenigstens einen Transferbehälter zur Aufnahme der kommissionierten Waren; und wenigstens eine dezentrale Abholstation zur Aufbewahrung von Transferbehältern und zur Ausgabe eines bestimmten Transferbehälters an einen entsprechend identifizierten Abnehmer, wobei der Transferbehälter Isolations- bzw. eine Kühleinrichtung zum Kühlhalten bzw. zur Kühlung von Waren, die im Transferbehälter aufgenommenen sind, umfasst. Der Transferbehälter weist unterschiedliche Bereiche auf, die für Kühlketten unterschiedlicher Temperaturniveaus geeignet sind.

Die Transferbehälter sind insbesondere standardisiert.

So können beispielsweise in einem Transferbehälter ein Gefrierfach, ein Kühlfach und ein nicht wärmeisolierter Bereich für Produkte mit unterschiedlichen Anforderungen vorgesehen sein. Dies kann dadurch erreicht werden, dass nur bestimmte Bereiche isoliert werden, und diese unter Umständen unterschiedlich stark. Außerdem kann vorgesehen sein, bestimmte Bereiche der Transferbox initial stärker bzw. niedriger abzukühlen als andere Bereiche. Durch die Isolation auch zwischen den Bereichen wird das jeweilige (zwischen den Bereichen unterschiedliche) Temperaturniveau über einen längeren Zeitraum aufrecht erhalten. Während des gesamten Prozesses von der Produktion des Lebensmittels bis zum Endverbraucher können so parallel Kühlketten mit unterschiedlichen Temperaturniveaus aufrecht erhalten werden.

Die zentrale Kommissionierstation stellt die bestellten Kundenpakete in einem zentral gekühlten Transferbehälter bzw. einer isolierten Kühlbox zusammen. Die Kommissionierstation ist so ausgelegt, dass sie auch kleine Pakete mit kleinen Produktmengen für Endkunden zusammenstellen kann.

Durch die Kommissionierung der Waren direkt in der Kommissionierstation für den Endverbraucher, wobei die Waren in einen erfindungsgemäßen Transferbehälter eingebracht werden, wird sicher gestellt, dass der Endverbraucher sein Warenpaket erhält, ohne dass die Kühlkette unterbrochen wird. Der Behälter kann dabei am Wohnort des Verbrauchers oder an einer dezentralen Abholstation hinterlegt werden. Dadurch wird die zeitliche Flexibilität des Verbrauchers bezüglich der Warenannahme erhöht. Wenn beispielsweise der Verbraucher am Abend zu wenig Zeit hat, um während der Ladenöffnungszeiten Lebensmitteleinkäufe zu tätigen, kann mit Hilfe des erfindungsgemäßen Systems ein bestellter Warenkorb jederzeit abgeholt werden. Die Kühlkette wird dabei nicht unterbrochen. Außerdem ist die Ware vor dem Zugriff durch andere Kunden geschützt.

Das System hat außerdem den Vorteil, dass nur wenige Produkte durch Bruch der Verpackung oder sonstige Beschädigung verderben oder unverkäuflich werden und aus dem Handel genommen werden müssen, da ein Zugriff durch andere Verbraucher während des gesamten Transportwegs bis in den Befugnisbereich des Empfängers verhindert wird. Dies hat wirtschaftliche Vorteile.

Darüber hinaus ist das System Ressourcen schonend. In Zeiten knapper und teurer werdender Lebensmittel ist es vorteilhaft, wenn möglichst wenig Ware, die nicht rechtzeitig abgenommen wurde, entsorgt werden muss. Im herkömmlichen Einzelhandel fallen große Mengen an Waren an, die nicht verbraucht werden.

Die Bereitstellung der Ware erfolgt durch die Bereitstellung mobiler Boxen, z. B. entsprechend ausgestatteter Container. Die Station umfasst ein Kühlsystem, damit die Kühlkette nicht unterbrochen wird, auch wenn zwischen der Einlagerung und der Abholung ein längerer Zeitraum liegen sollte.

In einer besonderen Ausführungsform der Erfindung weist das System eine Vielzahl von Verbraucherstationen und eine Datenaustauschverbindung zwischen der Verbraucherstation und der zentralen Kommissionierstation zur Übermittlung eines Kommissionierauftrags auf. Eine Bestellung kann beispielsweise per Internet erfolgen. Bei dieser Art der Bestellung können Präferenzen der einzelnen Kunden festgehalten und bei nachfolgenden Käufen Vorschläge für die Zusammenstellung von Warenkörben gemacht werden. Der Vorgang kann weitgehend automatisiert werden. Außerdem bietet das elektronische Anbieten bekannte Vorteile, nämlich die einfache und kostengünstige Vermittlung von Werbung, Verbrauchertips, etc., insbesondere gezielt, in Abhängigkeit von den Präferenzen der Kunden. Zudem können Kosten gespart werden, da der Einzelhandel und dessen Leistungen entfallen, und die Ware nicht aufwendig verpackt und präsentiert werden muss.

Insbesondere weist das System wenigstens ein zentrales Lager auf, wobei das zentrale Lager eine Kühlvorrichtung zur Kühlung verderblicher Ware aufweist.

Vorzugsweise weist das System eine Empfängerstation zur Aufnahme wenigstens eines Transferbehälters auf, wobei die Empfängerstation so ausgebildet ist, dass ein Zugriff auf den Transferbehälter nur durch einen entsprechend identifizierten Abnehmer ermöglicht wird. Die Kühleinrichtung umfasst insbesondere eine Wärme- bzw. Kälteisolierung, und/oder einen Aufnahmeraum zur Aufnahme eines Kühlmediums, und/oder ein Kühlaggregat. Die zuerst genannte Variante ist am kostengünstigsten und wird daher die erste Wahl sein. Isoliermaterialien (z. B. Styropor) sind kostengünstig und können über einen längeren Zeitraum eine ausreichende Wärme-/Kälteisolation gewährleisten. Während in den Lagerstätten und z. T. auch in den Transportmitteln auch in herkömmlichen Systemen Kühleinrichtungen vorhanden sind, wird die Kühlkette bei dem erfindungsgemäßen System zum Bereich des Endverbrauchers hin ergänzt und komplettiert. Die Transferbehälter können an den Transport- und Lagerstätten nach- bzw. heruntergekühlt werden, um anschließend über einen bestimmten Zeitraum diese Temperatur zu halten. Die Kühlung kann dabei sehr gezielt auch an bestimmten Außenbereichen der Transportbehälter erfolgen.

Das Verfahren zur Bereitstellung von Konsumgütern, insbesondere von Lebensmitteln, umfasst die folgenden Schritte: a) Übertragung von Daten zur Zusammenstellung eines Warenkorbs aus einer Vielzahl von Waren; und b) Kommissionierung der Waren zur Bereitstellung des Warenkorbs. Dabei umfasst das Verfahren einen weiteren Schritt c) Transfer des kommissionierten Warenkorbs zu einer Empfängerstation und/oder zu einer dezentralen Abholstation und Einlagern des Transferbehälters in der Empfängerstation bzw. in der dezentralen Abholstation, wobei ein Zugriff durch Unbefugte auf den Transferbehälter verhindert wird; und d) Freigabe des Transferbehälters zur Entnahme des Transferbehälters aus der Empfängerstation bzw. dezentralen Abholstation durch einen identifizierten Verbraucher; wobei der Transferbehälter im Schritt b) unterschiedliche Bereiche aufweist, die für Kühlketten unterschiedlicher Temperaturniveaus geeignet sind.

Das Verfahren folgt unter Ausschluss des Einzelhandels. Auf diese Weise können Kosten eingespart werden, die beispielsweise durch die längerfristige Lagerung, durch Warenpräsentation und -verpackung entstehen.

Insbesondere wird im Verfahrensschritt a) die Vielzahl von Waren elektronisch präsentiert und/oder angegeben, und der zusammengestellte Warenkorb umfasst einzelne der Waren.

Das Verfahren kann einen weiteren Verfahrensschritt d) umfassen, in dem ein bestimmter Transferbehälter nach Durchführung einer Identifikation zur Entnahme aus der Verbraucherstation bzw. der dezentralen Abholstation freigegeben wird.

Insbesondere kann die Identifikation elektronisch erfolgen.

Das Verfahren kann einen weiteren Verfahrensschritt e) umfassen, in dem ein Transferbehälter zur zentralen Kommissionierstation, zur Empfängerstation und/oder zur dezentralen Abholstation zurückgeführt wird. Auf diese Weise können Leergut und Müll in der bereitgestellten Transferbehältern an den Anbieter zurückgegeben werden. Es können mehrere Transferbehälter pro Kunde im System zirkulieren. Die zurückgegebenen Verpackungen können recycelt (Einweg) oder wieder verwendet werden (Mehrweg).

Insbesondere umfasst das Verfahren die Zirkulation einer Vielzahl von Transferbehältern im System, wobei die Transferbehälter in einem ersten Abschnitt des Kreislaufs mit Waren, in einem zweiten Abschnitt des Kreislaufs leer oder mit zu entsorgendem Material beladen sind.

Die Kühleinrichtung kann eine Wärme- bzw. Kälteisolierung, und/oder einen Aufnahmebereich zur Aufnahme eines Kühlmediums, und/oder ein Kühlaggregat umfassen.

### KURZE BESCHREIBUNG DER FIGUREN

Weitere Merkmale und Vorteile der Erfindung werden aus der nachfolgenden Beschreibung anhand der beigefügten Figuren deutlich. Es zeigen:
- Figur 1: ein erfindungsgemäßes System zur Bereitstellung von Lebensmitteln;
- Figur 2: einen im System aus der Figur 1 integrierten Transferbehälter; und
- Figur 3: eine in das System aus der Figur 1 integrierte Station zur Bereitstellung von Lebensmitteln.

### DETAILLIERTE BESCHREIBUNG EINES BEVORZUGTEN

### AUSFÜHRUNGSBEISPIELS

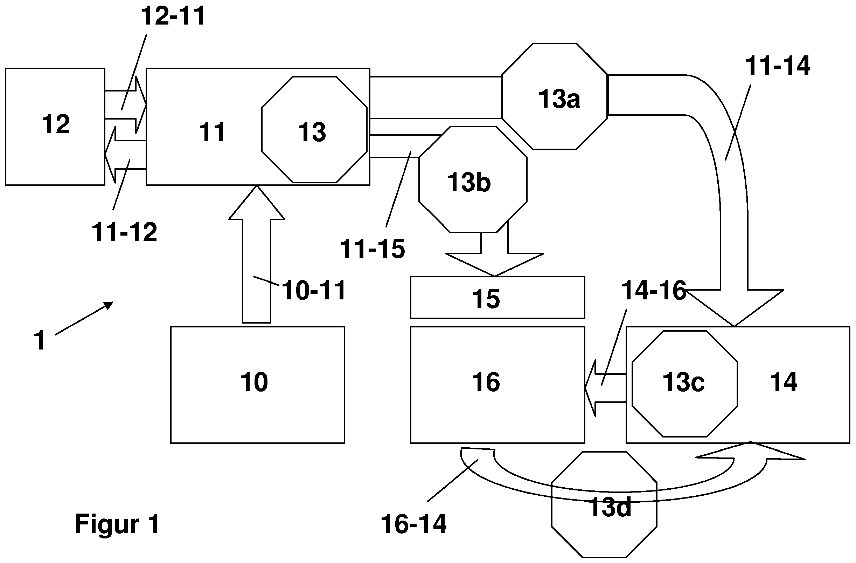

Die Figur 1 zeigt ein erfindungsgemäßes System 1 zur Bereitstellung von Lebensmitteln für Endverbraucher. Das System 1 weist eine, vorzugsweise mehrere dezentrale Verbraucherstationen 10, eine zentrale Kommissionierstation 11, ein zentrales Lager 12, Warenkörbe 13, 13a, 13b, 13c, 13d sowie eine dezentrale Abholstation 14 auf.

Von einer Verbraucherstation 10 können, angedeutet durch den Pfeil 10-11, Informationen, z. B. Warenbestellungen, an die zentrale Kommissionierstation 11 übermittelt werden. Insbesondere kann ein Verbraucher über die Verbraucherstation 10, bspw. einen Personal Computer (PC), ein Mobiltelefon, ein Multifunktionskommunikationsgerät, o. ä., Warenbestellungen an die Kommissionierstation 11 übermitteln. Zur Bewerkstelligung des Bestellvorgangs kann dem Verbraucher im System 1, durch Nutzung des Internets, ein Warenangebot vorgegeben werden. Die Auswahl verschiedener Waren durch den Endverbraucher, ebenso wie die Zahlungsabwicklung, kann in bekannter Weise, wie etwa in Internet-Verkaufssystemen (Internet-Shops), erfolgen. Der Datentransfer kann drahtlos oder über Kabel erfolgen. Das Warenangebot und die Warenpräsentation können, basierend auf vom Endverbraucher bereitgestellten Informationen oder abgeleitet aus dem früheren Kaufverhalten des Endverbrauchers, an den einzelnen Verbraucher angepasst werden.

Die zentrale Kommissionierstation 11 ist eine (weitgehend) automatisierte Logistikanlage, die aus einzelnen Wareneinheiten Warenkörbe für Endverbraucher zusammenstellt. Nach dem Eingang der Bestellung 10-11 greift das Kommissioniersystem 11 auf ein zentrales Lager 12 zu (Pfeil 11-12) und entnimmt die bestellten Waren (Pfeil 12-11). Die Wareneinheiten werden in der Kommissionierstation 11 kommissioniert, d. h. gemäß den Kundenbestellungen zusammengestellt. Aus den Waren wird ein individueller Warenkorb 13, der der über die Verbraucherstation 10 eingegebenen Bestellung 10-11 entspricht, erstellt. An dem kommissionierten Paket 13 kann eine Markierung (bspw. ein Barcode oder RFID-Chip) angebracht werden, die eine spätere Zuordnung des Warenkorbs 13 zur entsprechenden Bestellung 10-11 oder zur Person des Auftraggebers erlaubt.

Außerdem kann die Markierung Informationen enthalten, wohin der Warenkorb 13 geliefert und wo er zur Abholung durch einen Verbraucher zwischengelagert werden soll. Jeder Warenkorb kann als Transferbehälter 13 wie unten beschrieben konzipiert sein.

Im System 1 zirkuliert eine Vielzahl von Warenkörben, beispielhaft 13, 13a, 13b, 13c, 13d. Beispielsweise befindet sich ein bereits kommissionierter Warenkorb 13a auf dem Weg zu einer dezentralen stationären Abholstation 14 (Pfeil 11-14). Ein weiterer Warenkorb 13b kann direkt zu einer Empfänger- bzw. Verbraucherstation 15 geliefert werden (Pfeil 11-15). Außerdem kann in den Transferbehältern (z. B. 13b) Leergut und zu entsorgendes Material zurückgegeben werden.

In der dezentralen stationären Abholstation 14 werden kommissionierte Warenkörbe zwischengelagert, wie bspw. der Warenkorb 13c. Die dezentrale Abholstation 14 befindet sich an einem Ort in der Nähe bzw. im Einzugsbereich einer bestimmten Anzahl von Verbrauchern 16. Der Begriff "dezentral" bezieht sich auf das Gesamtsystem 1 und bedeutet, dass eine Vielzahl der dezentralen Abholstationen 14 im System vorgesehen ist, wobei alle Abholstationen 14 des Systems 1 von der zentralen Kommissionierstation 11 beliefert werden.

Die dezentrale Abholstation 14 kann an einem zugänglichen Ort, bspw. im Bereich einer Tiefgarage, einer Tankstelle, eines Parkplatzes, o. ä. aufgestellt sein. Die dezentrale Abholstation 14 wird als stationäre Station bereitgestellt. Die mobile Abholstation kann etwa in Form eines Containers bereitgestellt werden, der die für die Abholstation notwendigen Einrichtungen und Einbauten aufweist.

Die Abholstation 14 weist ein Zwischenlager auf und ist wie ein Regallager für Warenkörbe 13c mit einem Regalbediengerät, konzipiert. Außerdem weist die Abholstation 14 einen Ausgabebereich auf. Ein Verbraucher 16, der über die Verbraucherstation 10 einen Warenkorb 13c bestellt hat, identifiziert sich an der dezentralen Abholstation 14. Dies kann durch eine persönliche Kennung, durch einen Code, o. ä., erfolgen. Sofern ein Warenkorb 13c für den Verbraucher bereitsteht, wird dieser an den Verbraucher 16 abgegeben (Pfeil 14-16). Der Verbraucher 16 kann anschließend den Warenkorb 13c zu seinem Wohnort bringen und den Inhalt dort gekühlt weiter lagern.

Gleichzeitig besteht für den Verbraucher 16 die Möglichkeit, einen leeren Transferbehälter 13d, der auch (vorzugsweise recyclebare) Verpackungen enthalten kann, an die dezentrale Abholstation 14 abzugeben (Pfeil 16-14). Auf diese Weise entsteht für den Verbraucher 16 ein geschlossenes System von Versorgung mit Lebensmitteln und Entsorgung der anfallenden Verpackungen.

Wie anhand des Pfeils 11-15 dargestellt, kann ein Warenkorb 13b auch direkt an eine Verbraucherstation 15 versendet werden. Bei dieser Variante ist vorzugsweise am Ort der Anlieferung eine Aufnahmeeinrichtung vorgesehen, an die der Warenkorb 13b abgegeben und in der er gesichert aufbewahrt werden kann, bis der Verbraucher 16 den Warenkorb 13b entnimmt. Der Warenkorb 13b kann mittels eines Schlosses in einem befestigten Lagerraum der Verbraucherstation 15 sicher aufbewahrt sein. Es bietet sich an, ein automatisiertes System bereitzustellen, bei dem der Lieferant, bspw. durch Identifikation über den am Warenkorb 13b angebrachten Barcode, den Warenkorb 13b einlagert und der Verbraucher 16, beispielsweise mittels der Identifikation durch eine Chipkarte, Zugriff auf den Warenkorb 13b erhält. Die Verbraucherstation 15 kann etwa eine in der Größe an die Transferbehälter 13 angepasste Box sein, in der die Transferbehälter 13 aufgenommen werden können.

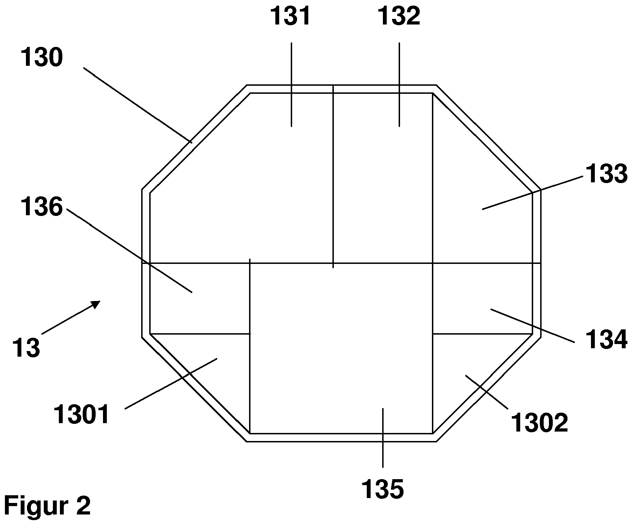

Das System 1 ist vorzugsweise für die Bereitstellung von Lebensmitteln an den Verbraucher konzipiert. Die Besonderheit daran ist, dass unter Lebensmitteln in der Regel auch verderbliche Ware vorhanden ist. Um dem Prozess des Verderbens der Lebensmittel zu verlangsamen, wird im herkömmlichen System aus Groß- und Einzelhandel sichergestellt, dass die Lebensmittel bis zur Abnahme durch den Endverbraucher in einer ununterbrochenen Kühlkette gelagert und weitergegeben werden. Um auch im vorliegenden System 1 eine ununterbrochene Kühlkette sicherzustellen, weist das Lager 12 Kühleinrichtungen auf, in denen die verderblichen Lebensmittel gekühlt gelagert werden. Um eine weitere Kühlung aufrechtzuerhalten, sind die im System 1 zirkulierenden Transferbehälter 13, 13a, 13b, 13c, 13d als Kühlboxen ausgebildet. Eine derartige Kühlbox 13 ist beispielhaft in der Figur 2 dargestellt.

Die Kühlbox 13 weist eine Vielzahl von Fächern 131, 132, 133, 134, 135, 136 mit unterschiedlicher Größe auf. Die einzelnen Fächer können hinsichtlich ihrer Größe und Form für die Aufnahme unterschiedlicher Waren oder Warenverpackungen angepasst sein, bspw. durch die Anpassung an Verpackungsgrößen einzelner Waren.

Erfindungsgemäß ist die Kühlbox 13 mit einer Kühleinrichtung ausgestattet. Die Kühleinrichtung kann insbesondere eine wärme- bzw. kälteisolierende Außenwand 130 aufweisen. Diese kann sich im gesamten Bereich der Außenwand der Kühlbox 13 erstrecken und den Aufnahmeraum vollständig umschließen. Die isolierende Wand 130 kann jedoch auch nur einen Teil des Innenraums der Kühlbox 13 umschließen, in den verderbliche Ware gezielt eingebracht wird. Die übrigen Waren können im nicht isolierten Teil der Kühlbox 13 aufbewahrt werden. Das System umfasst außerdem die Möglichkeit, dass die Kühlboxen 13 unterschiedliche Bereiche aufweisen, die für Kühlketten unterschiedlichen Temperaturniveaus geeignet sind. So kann beispielsweise für Tiefkühlkost ein Bereich sehr tiefer Temperatur (Gefrierfach), für bestimmte Lebensmittel eine niedrige Temperatur über 0° C, für Molkereiprodukte ein Kühlfach mit beispielsweise +7° C, für Obst und Gemüse ein Kühlfach mit noch etwas höherer Temperatur, und für nicht verderbliche Lebensmittel wie Reis oder Nudeln nicht gekühlte Fächer eingerichtet sein. Auf diese Weise können unterschiedliche Kühlniveaus aufrechterhalten werden, d. h. während des gesamten Prozesses von der Produktion des Lebensmittels bis zum Endverbraucher können parallel Kühlketten mit unterschiedlichen Temperaturniveaus aufrecht erhalten werden.

So könnten im Beispiel der Figur 2 nur die Fächer 131, 132 und 133 wärmeisoliert sein, die übrigen Fächer dagegen nicht. Die Fächer 131, 132 und 133 sind wiederum untereinander wärmeisoliert, sodass in jedem der Fächer eine andere Temperatur aufrecht erhalten werden kann. Wird nun anfangs das Fach 133 auf eine niedrigere Temperatur abgekühlt als die anderen Fächer 131 und 132, so wird diese niedrigere Temperatur über einen längeren Zeitraum aufrecht erhalten. Das Fach133 kann damit Baustein in einer Kühlkette auf dem niedrigen Temperaturniveau sein.

Außerdem kann die Kühleinrichtung einen oder mehrere Räume 1301 in beliebiger Anordnung zur Aufnahme eines passiven Kühlmediums aufweisen. So kann im Raum 1301 gekühltes Material mit hoher Wärmekapazität, bspw. Wasser, eingebracht sein. Vor dem Beladen der Kühlbox 13 mit verderblicher Ware wir dem Kühlmedium Wärme entzogen, sodass bspw. das vorhandene Wasser gefriert. Das Eis wird, während sich die Kühlbox 13 im Umlauf befindet, den Innenraum durch Wärmeentzug kühlen und damit im Bereich verderblicher Waren eine entsprechend niedrige Temperatur aufrechterhalten.

In einer alternativen Ausführungsform kann die Kühleinrichtung ein aktives Kühlelement 1302 aufweisen. Das aktive Kühlelement 1302 kann insbesondere ein batteriebetriebenes Kühlaggregat, bspw. ein Absorptionskühlaggregat, sein. Es ist auch vorstellbar, auf Sorptionsprozessen (bspw. Zeolith-Wasser-Systeme) basierende Kühlsysteme zu verwenden. Dieses erlaubt ein Aktivieren der Kühlung zu einem gegebenen Zeitpunkt und kann für die Kühlboxen angemessen dimensioniert werden. Selbstverständlich können die unterschiedlichen (aktiven und passiven) Maßnahmen beliebig kombiniert werden.

Durch die Bereitstellung einer erfindungsgemäßen Kühlbox wird sichergestellt, dass die Lebensmittel nach Verlassen des gekühlten zentralen Lagers 12 bis zum Endverbraucher 16 stets ausreichend gekühlt sind, d. h. eine Unterbrechung der Kühlkette verhindert wird, sodass die Ware nicht verdirbt.

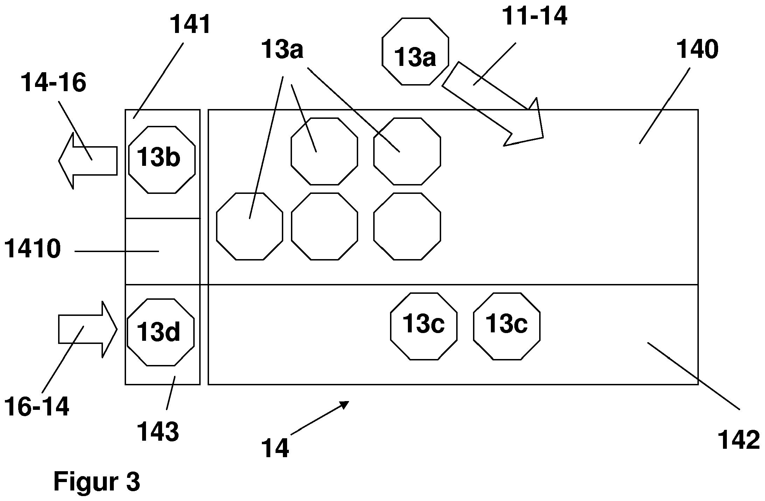

Die Figur 3 zeigt schematisch eine dezentrale Abholstation 14. Diese weist ein Regallager 114 zur Aufnahme kommissionierter und befüllter Warenkörbe 13a auf. Sind beispielsweise die Warenkörbe 13 als Kühlboxen mit (passiver) Isolierung ausgebildet und übersteigt die Lagerzeit bei höherer Temperatur eine bestimmte Höchstdauer, so kann sich die Isolierung als nicht ausreichend herausstellen. Das Regallager 114 kann daher optional als Kühllager mit einem Kühlsystem ausgebildet sein. Auf diese Weise wird verhindert, dass der Inhalt der eingelagerten Warenkörbe sich erwärmt.

Vorzugsweise kann das System (beispielsweise eine Einrichtung im dezentralen Lager) erkennen, wenn ein Warenkorb 13 innerhalb eines bestimmten Zeitraums nicht abgeholt wurde. Das System kann dann nach einem bestimmten Algorithmus reagieren. So kann der Warenkorb identifiziert und bei nächster Gelegenheit wieder zur zentralen Kommissionierstation zurück transportiert werden. Der Warenkorb kann auch an einen anderen Ort transportiert werden, z. B. an einen alternativen Lieferort, z. B. an ein anderes dezentrales Lager des Systems. Alternativ oder zusätzlich dazu kann der Besteller des Warenkorbs benachrichtigt oder gewarnt werden, dass der Warenkorb bereitsteht, aber noch nicht abgeholt wurde, und wie lange evtl. eine Abholung noch möglich ist. Dem Besteller kann angeboten werden, einen alternativen Abholort anzugeben oder die Abholung abzusagen.

Darüber hinaus weist die Abholstation 14 eine Ausgabeeinrichtung 141 auf. Ein Verbraucher identifiziert sich zunächst über die Identifikationseinrichtung 1410 der Ausgabeeinrichtung 141. Dabei kann jede mögliche Art der Identifikation, bspw. durch eine Magnetkarte, ein biometrisches Kennzeichen (z. B. Fingerabdruck) oder die Eingabe eines Codes/Passwortes erfolgen. Erkennt die Identifikationseinrichtung 1410 den Verbraucher, wird überprüft, ob und welcher Warenkorb sich im Lager 140 befindet. Anschließend wird dieser Warenkorb 13b durch eine Transporteinrichtung (z. B. Förderband) zur Ausgabeeinrichtung 141 gebracht und dort zur Entnahme durch den Endverbraucher (Pfeil 14-16) abgestellt und freigegeben.

Außerdem weist die dezentrale Abholstation 14 einen zweiten Lagerbereich 142 auf, der zur Aufnahme zurückgegebener Transferbehälter 13c bestimmt ist. In der Figur 3 wurde ein zurückgegebener Transferbehälter 13d in einer Rückgabeeinrichtung 143 abgelegt (Pfeil 16-14). In der Rückgabeeinrichtung 143 kann bestimmt werden, ob bspw. Pfand für zurückgegebenes Leergut anfällt. Außerdem kann im zurückgegebenen Transferbehälter 13d eingebrachtes Einweg-Material (eventuell vorsortiert) abgegeben werden. Dieses kann anschließend in einfacher Weise getrennt und recycelt werden.

## Patentansprüche

1. System (1) zur Bereitstellung von Konsumgütern, insbesondere von Lebensmitteln, umfassend:
eine zentrale Kommissionierstation (11), die eine weitgehend automatisierte Logistikanlage ist, die aus einzelnen Wareneinheiten Warenkörbe für Endverbraucher zusammenstellt;
wenigstens einen im System zirkulierenden Transferbehälter (13) zur Aufnahme der kommissionierten Waren und zum Transport zum Endverbraucher; und
wenigstens eine dezentrale Abholstation (14) zur Aufbewahrung von Transferbehältern (13) und zur Ausgabe eines bestimmten Transferbehälters (13b) an einen entsprechend identifizierten Abnehmer;
wobei
der Transferbehälter (13) eine Kühleinrichtung (130, 1301, 1302) zur Kühlung bzw. zum Kühlhalten von Waren, die im Transferbehälter (13) aufgenommenen sind, umfasst,
**dadurch gekennzeichnet, dass**
die Bestellung von Waren per Internet erfolgt und wobei die Abholstation (14) mobil ist und die Abholstation (14) ein Regallager (114) für Warenkörbe mit einem Regalbediengerät aufweist, und wobei der Transferbehälter (13) unterschiedliche Bereiche aufweist, die für Kühlketten unterschiedlicher Temperaturniveaus geeignet sind.

2. System (1) nach Anspruch 1,
**dadurch gekennzeichnet, dass**
das System (1) eine Vielzahl von Verbraucherstationen (10) und eine Datenaustauschverbindung zwischen der Verbraucherstation (10) und der zentralen Kommissionierstation (11) zur Übermittlung eines Kommissionierauftrags aufweist.

3. System (1) nach einem der vorhergehenden Ansprüche,
**dadurch gekennzeichnet, dass**
das System (1) wenigstens ein zentrales Lager (12) aufweist, wobei das zentrale Lager (12) eine Kühlvorrichtung zur Kühlung verderblicher Ware aufweist.

4. System (1) nach einem der vorhergehenden Ansprüche,
**dadurch gekennzeichnet, dass**
das System (1) eine Empfängerstation (15) zur Aufnahme wenigstens eines Transferbehälters (13) aufweist, wobei die Empfängerstation (15) so ausgebildet ist, dass ein Zugriff auf den Transferbehälter (13) nur durch einen entsprechend identifizierten Abnehmer ermöglicht wird.

5. System (1) nach einem der vorhergehenden Ansprüche,
**dadurch gekennzeichnet, dass**
die Kühleinrichtung (130, 1301, 1302) eine Wärme- bzw. Kälteisolierung und/oder einen Aufnahmeraum zur Aufnahme eines Kühlmediums und/oder ein Kühlaggregat umfasst.

6. Verfahren zur Bereitstellung von Konsumgütern, insbesondere von Lebensmitteln, umfassend die folgenden Schritte:
a) Übertragung von Daten zur Zusammenstellung eines Warenkorbs (13) aus einer Vielzahl von Waren;
b) Kommissionierung der Waren zur Bereitstellung des Warenkorbs durch Zusammenstellung der Waren in einem Transferbehälter (13), der eine Kühleinrichtung (130, 1301, 1302) aufweist;
c) Transfer des Transferbehälters mit dem kommissionierten Warenkorb (13) zu einer Empfängerstation (15) und/oder zu einer dezentralen Abholstation (14) und Einlagern des Transferbehälters (13) in der Empfängerstation (15) bzw. in der dezentralen Abholstation (14), wobei ein Zugriff durch Unbefugte auf den Transferbehälter (13) verhindert wird,
**dadurch gekennzeichnet, dass**
die Übertragung von Daten im Schritt a) per Internet erfolgt, und der Transferbehälter (13) im Schritt b) unterschiedliche Bereiche aufweist, die für Kühlketten unterschiedlicher Temperaturniveaus geeignet sind, und wobei im Schritt c) die dezentrale Abholstation (14) mobil ist und ein Regallager (114) für Warenkörbe (13, 13a) aufweist, und das Einlagern des Transferbehälters in dem Regallager (114) der dezentralen mobilen Abholstation (14) erfolgt..

7. Verfahren nach Anspruch 6,
**dadurch gekennzeichnet, dass**
im Verfahrensschritt a) die Vielzahl von Waren elektronisch präsentiert und/oder angegeben wird, und der zusammengestellte Warenkorb (13) einzelne der Waren umfasst.

8. Verfahren nach einem der Ansprüche 6 oder 7,
**dadurch gekennzeichnet, dass**
das Verfahren einen weiteren Verfahrensschritt d) umfasst, in dem ein bestimmter Transferbehälter (13) nach Durchführung einer Identifikation zur Entnahme freigegeben wird.

9. Verfahren nach Anspruch 8,
**dadurch gekennzeichnet, dass**
die Identifikation elektronisch erfolgt.

10. Verfahren nach einem der Ansprüche 6 bis 9,
**dadurch gekennzeichnet, dass**
das Verfahren einen weiteren Verfahrensschritt e) umfasst, in dem ein Transferbehälter (13) zur zentralen Kommissionierstation (11), zur Empfängerstation (15) und/oder zur dezentralen Abholstation (13) zurückgeführt wird.

11. Verfahren nach einem der Ansprüche 6 bis 10,
**dadurch gekennzeichnet, dass**
das Verfahren die Zirkulation einer Vielzahl von Transferbehältern (13) im System (1) umfasst, wobei die Transferbehälter (13) in einem ersten Abschnitt des Kreislaufs mit Waren, in einem zweiten Abschnitt des Kreislaufs mit zu entsorgendem Material bestückt sind.

12. Verfahren nach einem der Ansprüche 6 bis 11,
**dadurch gekennzeichnet, dass**
die Kühleinrichtung (130, 1301, 1302) eine Wärme- bzw. Kälteisolierung und/oder einen Aufnahmeraum zur Aufnahme eines Kühlmediums und/oder ein Kühlaggregat umfasst.

## Claims

1. A system (1) for the provision of consumer goods, in particular foodstuffs, comprising:
a central picking station (11) which is substantially an automated logistic facility, which composes baskets of goods for end consumers of single units of good;
at least one transfer container (13) circulating in the system for receiving the composed goods and for transporting them to the end consumer; and
at least one peripheral collection station (14) for accommodating transfer containers (13) and for outputting a particular transfer containers (13b) to a correspondingly identified;
wherein
the transfer container (13) has a cooling device (130, 1301, 1302) for cooling and maintaining cool, respectively, of the goods accommodated in the transfer container (13),
**characterized in that**
ordering of goods is accomplished via internet, and wherein the collection station (14) is mobile and the collection station (14) has a shelf storage (114) for baskets of goods, the shelf storage having a rack feeder, and wherein the transfer container (13) has different areas which are suitable for cold chains of different temperatures.

2. The system (1) according to claim 1,
**characterized in that**
the system (1) comprises a plurality of user stations (10) and a data exchange connection between the user station (10) and the central picking station (11) for the purpose of transmitting a picking order.

3. The system (1) according to any of the previous claims
**characterized in that**
the system (1) comprises at least one central storage (12), wherein the central storage (12) has a cooling device for cooling perishable goods.

4. The system (1) according to any of the previous claims
**characterized in that**
the system (1) has a receiving station (15) for receiving at least one transfer container (13), wherein the receiving station (15) is configured such that access to the transfer container (13) is only possible by a consumer that has been identified accordingly.

5. The system (1) according to any of the previous claims
**characterized in that**
the cooling device (130, 1301, 1302) comprises a heat insulation and cold insulation, respectively, and/or a receiving space for receiving a cooling medium and/or a cooling aggregate.

6. A method of providing consumer goods, in particular foodstuffs, comprising the following steps:
a) transmission of data relating to the composition of a goods basket (13) from a plurality of goods;
b) picking of the goods for the purpose of providing the goods basket by composing the goods in a transfer container (13), which has a cooling device;
c) transfer of the transfer container comprising the picked goods basket (13) to a receiving station (15) and/or to a peripheral collection station (14), and
storing the transfer container (13) in the receiving station (15) and the peripheral collection station (14), respectively, wherein access by unauthorized persons to the transfer container (15) is prevented,
**characterized in that**
data transfer in step a) is accomplished via internet, and the transfer container (13) in step b) has different areas which are suitable for cold chains of different temperature levels, and wherein in step c) the peripheral collection station (14) is mobile and has a shelf storage (114) for baskets of goods (13, 13a), and storing of the transfer container (13) is accomplished within the shelf storage of the mobile collection station (14).

7. The method according to claim 6,
**characterized in that**
in method step a) a plurality of goods is presented and/or indicated electronically, and the composed goods basket comprises some of the goods.

8. The method according to claim 6 or 7,
**characterized in that**
the method comprises a further method step d) in which a particular transfer container (13) is released for collection after an identification has been carried out.

9. The method according to claim 8,
**characterized in that**
the identification is carried out electronically.

10. The method according to any of the claims 6 to 9,
**characterized in that**
the method comprises a further method step e) in which a transfer container (13) is returned to the central picking station (11), to the receiving station (15) and/or to the peripheral collection station (14).

11. The method according to any of the claims 6 to 10,
**characterized in that**
the method comprises circulation of a plurality of transfer containers (13) in the satsem (1) , wherein in a first part of the circle the transfer containers are charged with goods and in a second part of the circle they are charged with disposable material

12. The method according to any of the claims 6 to 1,
**characterized in that**
the cooling device (130, 1301, 1302) comprises a heat insulation and cold insulation, respectively, and/or a receiving space for receiving a cooling medium and/or a cooling aggregate.

## Revendications

1. Système (1), destiné à mettre à disposition des produits consommables, notamment des produits alimentaires, comprenant :
un poste de préparation de commandes (11) centralisé, qui est une installation logistique largement automatisée, qui à partir d'articles individuels compose des paniers de produits destinés à des consommateurs finaux ;
au moins un contenant de transfert (13) qui circule dans le système, destiné à recevoir les articles préparés pour la commande et à les transporter vers le consommateur final et au moins un poste d'enlèvement (14) décentralisé, destiné à garder des contenants de transfert (13) et à distribuer un contenant de transfert (13b) précis à un client identifié en conséquence,
le contenant de transport (13) comprenant un système réfrigérant (130, 1301, 1302), destiné à réfrigérer ou à maintenir au frais des produits qui sont réceptionnés dans le contenant de transfert (13),
**caractérisé en ce que** la commande de produit s'effectue par Internet et le poste d'enlèvement (14) étant mobile et le poste d'enlèvement (14) comportant un rayonnage (114) destiné à des paniers de produits, pourvu d'un transstockeur et le conteneur de transfert (13) comportant différentes zones qui sont adaptées pour des chaînes de froid de différents niveaux de température.

2. Système (1) selon la revendication 1,
**caractérisé en ce que**
le système (1) comporte une pluralité de postes consommateurs (10) et une connexion pour l'échange de données entre le poste consommateur (10) et le poste de préparation de commandes (11) centralisé, pour la transmission d'un ordre de préparation de commande.

3. Système (1) selon l'une quelconque des revendications précédentes,
**caractérisé en ce que**
le système (1) comporte au moins un entrepôt (12) centralisé, l'entrepôt (12) centralisé comportant un dispositif réfrigérant, destiné à réfrigérer les produits périssables.

4. Système (1) selon l'une quelconque des revendications précédentes,
**caractérisé en ce que**
le système (1) comporte un poste récepteur (15), destiné à recevoir au moins un contenant de transfert (13), le poste récepteur (15) étant conçu de telle sorte qu'un accès au contenant de transfert (13) ne soit rendu possible qu'à un client identifié en conséquence.

5. Système (1) selon l'une quelconque des revendications précédentes,
**caractérisé en ce que**
le système réfrigérant (130, 1301, 1302) comprend une isolation contre la chaleur ou contre le froid et/ou un espace de réception, destiné à recevoir un agent réfrigérant et/ou un groupe réfrigérant.

6. Procédé, destiné à mettre à disposition des produits consommables, notamment des produits alimentaires, comprenant les étapes suivantes, consistant à :
a) transmettre des données destinées à composer un panier de produits (13) comprenant une pluralité de produits ;
b) préparer la commande de produits pour la mise à disposition du panier de produits par rassemblement des produits dans un contenant de transfert (13), qui comporte un système réfrigérant (130, 1301, 1302) ;
c) transférer le contenant de transfert avec le panier de produits (13) préparé vers un poste récepteur (15) et/ou vers un poste d'enlèvement (14) décentralisé et entreposer les contenants de transfert (13) dans le poste récepteur (15) ou dans le poste d'enlèvement (14) décentralisé, l'accès au contenant de transfert (13) à des personnes non autorisées étant empêché,
**caractérisé en ce que** la transmission de données dans l'étape a) s'effectue par Internet et le contenant de transfert (13) dans l'étape b) comporte différentes zones qui sont adaptées pour des chaînes de froid de différents niveaux de température et dans l'étape c), le poste d'enlèvement (14) décentralisé étant mobile et comportant un rayonnage (114) pour des paniers de produits (13, 13a) et **en ce que** l'entreposage du contenant de transfert s'effectue dans le rayonnage (114) du poste d'enlèvement (14) mobile décentralisé.

7. Procédé selon la revendication 6,
**caractérisé en ce que**
dans l'étape de procédé a), la pluralité de produits est présentée et/ou indiquée par voie électronique et **en ce que** le panier de produits (13) composé comprend des produits isolés.

8. Procédé selon l'une quelconque des revendications 6 ou 7,
**caractérisé en ce que**
le procédé comprend une étape de procédé d) supplémentaire, lors de laquelle un certain contenant de transfert (13) est libéré pour son enlèvement, après la réalisation d'une identification.

9. Procédé selon la revendication 8,
**caractérisé en ce que**
l'identification s'effectue par voie électronique.

10. Procédé selon l'une quelconque des revendications 6 à 9,
**caractérisé en ce que**
le procédé comprend une étape de procédé e) supplémentaire, lors de laquelle un contenant de transfert (13) est ramené vers le poste de préparation de commandes (11) centralisé, vers le poste récepteur (15) et/ou vers le poste d'enlèvement (13) décentralisé.

11. Procédé selon l'une quelconque des revendications 6 à 10,
**caractérisé en ce que**
le procédé comprend la circulation d'une pluralité de contenants de transfert (13) dans le système (1), les contenants de transfert (13) étant équipés dans un premier tronçon du circuit avec des produits, dans un second tronçon du circuit avec des matières à évacuer.

12. Procédé selon l'une quelconque des revendications 6 à 11,
**caractérisé en ce que**
le système réfrigérant (130, 1301, 1302) comprend une isolation contre la chaleur ou contre le froid et/ou un espace de réception, destiné à recevoir un agent réfrigérant et/ou un groupe réfrigérant.
